# EUROPEAN PATENT APPLICATION

(11) **EP 4 686 965 A1**
(43) Date of publication of application: **04.02.2026**
(21) Application number: 24218232.7
(22) Date of filing: 09.12.2024
(51) Int. Cl.: G02B 6/12, G02B 6/122, G02B 6/125, G02B 6/293

(54) **MULTIPLE-WIDTH DELAY ARMS FOR A WAVELENGTH-DIVISION-MULTIPLEXING FILTER**

(30) Priority: 31.07.2024 US 202418790066
(71) Applicant: GlobalFoundries U.S. Inc., Malta, NY 12020 (US)
(72) Inventor: DASH, Aneesh, 560045 Bangalore (IN); CHANDRAN, Sujith, Malta, NY, 12020 (US); BIAN, Yusheng, Malta, NY, 12020 (US); CHATTERJEE, Avijit, 560045 Bangalore (IN); LEE, Won Suk, Malta, NY, 12020 (US); RAKOWSKI, Michal, Malta, NY, 12020 (US)
(74) Representative: Lambacher, Michael

(57) **Abstract**

Structures for a wavelength-division-multiplexing filter and methods of forming a structure for a wavelength-division-multiplexing filter. The structure comprises a first waveguide core including a first phase delay arm and a second waveguide core including a second phase delay arm. The first phase delay arm has a first section and a second section connected to the first section. The first section of the first phase delay arm and the second section of the first phase delay arm are asymmetrical.

## Description

### BACKGROUND

The disclosure relates to photonic chips and, more specifically, to structures for a wavelength-division-multiplexing filter and methods of forming a structure for a wavelength-division-multiplexing filter.

Photonic chips are used in many applications and systems including, but not limited to, data communication systems and data computation systems. A photonic chip includes a photonic integrated circuit comprised of photonic components, such as modulators, polarizers, and optical couplers, that are used to manipulate light received from a light source, such as a laser or an optical fiber.

Wavelength division multiplexing is a technology that multiplexes multiple data streams onto a single optical link. In a wavelength-division-multiplexing scheme, a set of data streams is encoded onto optical carrier signals with a different wavelength of light for each data stream. The optical carrier signals of the individual data streams are then combined (i.e., multiplexed) by a set of wavelength-division-multiplexing filters forming a multiplexer, which has a dedicated input for the data stream of each wavelength and a single output at which the individual data streams that are combined into a single multi-wavelength data stream exit for further transport through a single optical link. At the receiver side of the optical link, a set of wavelength-division-multiplexing filters of a demultiplexer separates (i.e., demultiplexes) the optical carrier signals of the individual data streams, and the separated optical carrier signals may be routed to corresponding photodetectors.

Conventional designs for wavelength-division-multiplexing filters may suffer from various disadvantages. For example, conventional designs for wavelength-division-multiplexing filters may be highly sensitive to fabrication variations. Fabrication variations may result in a performance degradation, such as a significant channel drift. The performance degradation may be particularly severe conventional designs for wavelength-division-multiplexing filters that employ silicon nitride as a material for the constituent waveguide cores.

Improved structures for a wavelength-division-multiplexing filter and methods of forming a structure for a wavelength-division-multiplexing filter are needed.

### SUMMARY

In an embodiment of the invention, a structure for a wavelength-division-multiplexing filter is provided. The structure comprises a first waveguide core including a first phase delay arm and a second waveguide core including a second phase delay arm. The first phase delay arm has a first section and a second section connected to the first section. The first section of the first phase delay arm and the second section of the first phase delay arm are asymmetrical.

The structure may further comprise a first directional coupler, and a second directional coupler; the first phase delay arm of the first waveguide core and the second phase delay arm of the second waveguide core may be positioned between the first directional coupler and the second directional coupler.

Further, the first phase delay arm and the second phase delay arm may comprise silicon nitride.

Further, the first section of the first phase delay arm may be connected to the second section of the first phase delay arm by a bend; the bend may be semicircular.

Further, the first section of the first phase delay arm may include a first taper and a second taper that may be connected to the first taper. According to one implementation the first section of the first phase delay arm may include a first segment that connects the first taper to the second taper. According to another implementation, the second taper may be directly connected to the first taper.

Further, the first section of the first phase delay arm may include a third taper and a fourth taper that may be directly connected to the third taper.

Further, the second section of the first phase delay arm may include a third taper and a fourth taper connected to the third taper. Further, the first section of the first phase delay arm may include a first segment that connects the first taper to the second taper, the second section of the first phase delay arm may include a second segment that connects the third taper to the fourth taper; the first segment may have a first width, the second segment may have a second width, and the first width and the second width may be unequal. Further, the first segment may have a first length, the second segment may have a second length, and the first length and the second length may be unequal.

Further, the second phase delay arm may have a first section and a second section connected to the first section, and the first section of the second phase delay arm may be asymmetrical from the second section of the second phase delay arm. Further, the first section of the second phase delay arm may include a first taper and a second taper connected to the first taper, and the second section of the second phase delay arm may include a third taper and a fourth taper connected to the third taper.

Further, the first section of the second phase delay arm may include a first segment that connects the first taper to the second taper, the second section of the second phase delay arm may include a second segment connecting the third taper to the fourth taper; the first segment may have a first width, the second segment may have a second width, and the first width and the second width may be unequal. Alternatively, the second taper may be directly connected to the first taper. Further, the first section of the first phase delay arm may include multiple widths, and the second section of the first phase delay arm may include multiple widths.

Further, the first section of the first waveguide core may comprise a first material having a first refractive index, the second section of the first waveguide core may comprise a second material having a second refractive index, and the first refractive index and the second refractive index may be unequal. Additionally, or alternatively, the first section of the first waveguide core may comprise a first material having a first thickness, the second section of the first waveguide core may comprise a second material having a second thickness, and the first thickness and the second thickness may be unequal.

In an embodiment of the invention, a method of forming a structure for a wavelength-division-multiplexing filter is provided. The method comprises forming a first waveguide core including a first phase delay arm, and forming a second waveguide core including a second phase delay arm. The first phase delay arm has a first section and a second section connected to the first section, and the first section of the first phase delay arm and the second section of the first phase delay arm are asymmetrical.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a diagrammatic view of a structure for a wavelength-division-multiplexing filter in accordance with embodiments of the invention.
FIG. 2 is a top view of a structure in accordance with embodiments of the invention that may be used in a filter stage of the wavelength-division-multiplexing filter of FIG. 1.
FIG. 2A is a cross-sectional view of the structure taken generally along line 2A-2A in FIG. 2.
FIG. 2B is a cross-sectional view of the structure taken generally along line 2B-2B in FIG. 2.
FIGS. 3A, 3B are cross-sectional views of the structure at a fabrication stage of the processing method subsequent to FIGS. 2, 2A, 2B.
FIG. 4 is a top view of a structure in accordance with alternative embodiments of the invention that may be used in a filter stage of the wavelength-division-multiplexing filter of FIG. 1.
FIG. 5 is a top view of a structure in accordance with alternative embodiments of the invention that may be used in a filter stage of the wavelength-division-multiplexing filter of FIG. 1.
FIG. 6 is a top view of a structure in accordance with alternative embodiments of the invention that may be used in a filter stage of the wavelength-division-multiplexing filter of FIG. 1.

### DETAILED DESCRIPTION

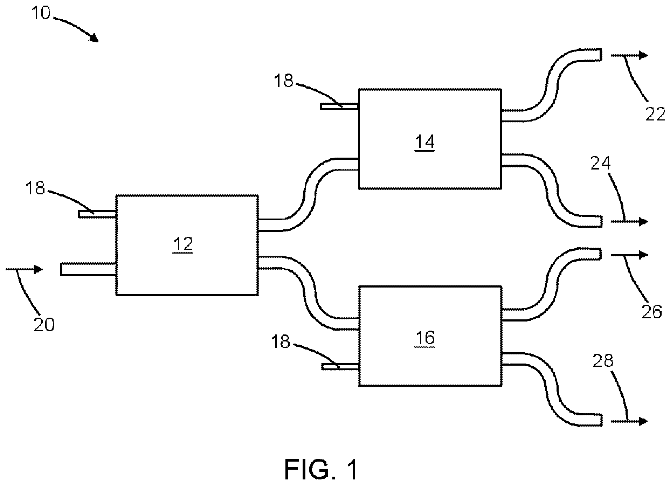

With reference to FIG. 1 and in accordance with embodiments of the invention, a structure 10 for a wavelength-division-multiplexing filter includes a filter stage 12 and a pair of filter stages 14, 16 that are coupled by waveguides to the filter stage 12. Each of the filter stages 12, 14, 16 includes an open terminal that may be coupled with a terminator 18, which may be an absorber or a grating coupler. In alternative embodiments, additional channels may be added to the structure 10 by cascading together additional filter stages with the filter stages 12, 14, 16. In an embodiment, the structure 10 may enable coarse wavelength-dependent demultiplexing or multiplexing. In an embodiment, the structure 10 may enable dense wavelength-dependent demultiplexing or multiplexing. The structure 10, in any of its embodiments described herein, may be integrated into a photonic chip.

The structure 10 is a multiple-channel device that may be configured to receive light 20 from a waveguide at an input to the filter stage 12 that includes mixed optical signals of multiple different wavelengths. For example, light 20 may be characterized by different wavelengths within the near infrared portion (e.g., 850 nanometers to 1650 nanometers) of the electromagnetic spectrum. In the representative embodiment, the structure 10 may be configured to receive light with four different wavelengths, namely optical signals 22, optical signals 24, optical signals 26, and optical signals 28. The filter stages 12, 14, 16 of the structure 10 may split or divide the light 20 according to wavelength. The filter stage 12 may separate the optical power for optical signals 22, 24 (e.g., odd wavelengths) from the optical power for the optical signals 26, 28 (e.g., even wavelengths). The light included in the optical signals 22, 24 may be provided by a linking waveguide core from an output of the filter stage 12 to an input to the filter stage 14, and the light included in the optical signals 26, 28 may be provided by a linking waveguide core from another output of the filter stage 12 to an input to the filter stage 16. The filter stage 14 separates the optical power for the optical signals 22 from the optical power for the optical signals 24, directs the optical signals 22 to a waveguide core at an output, and directs the optical signals 24 to a waveguide core at a different output. The filter stage 16 separates the optical power for the optical signals 26 from the optical power for the optical signals 28, directs the optical signals 26 to a waveguide core at an output, and directs the optical signals 28 to a waveguide core at a different output.

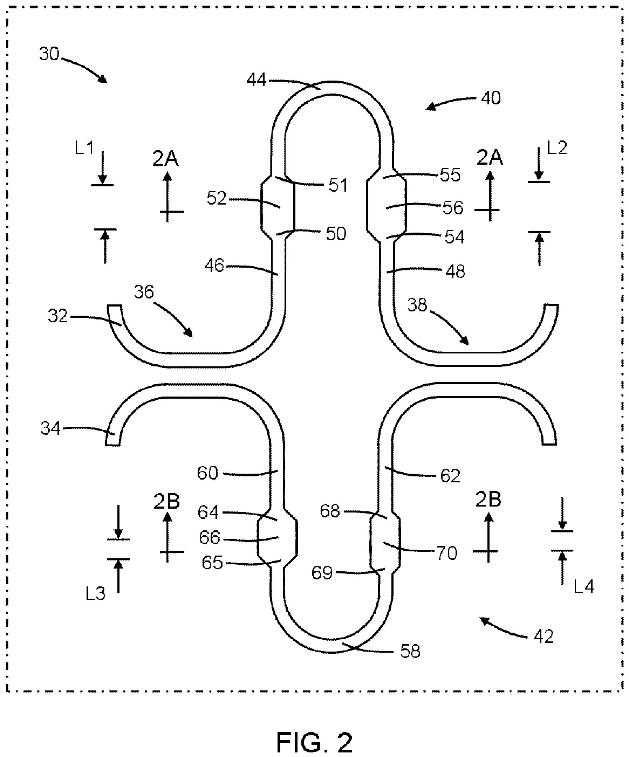

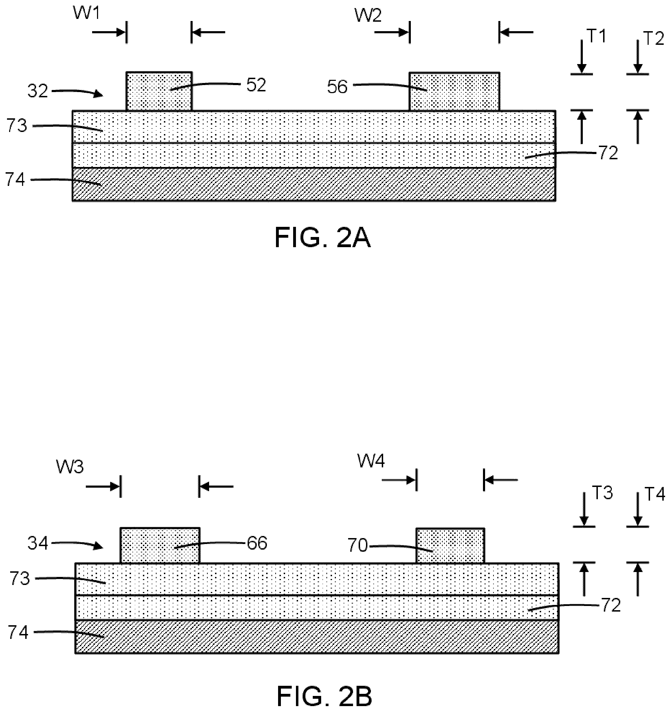

With reference to FIGS. 2, 2A, 2B and in accordance with embodiments of the invention, a structure 30 for a wavelength-division-multiplexing filter may be deployed as a photonic component in each of the filter stages 12, 14, 16 of the structure 10 (FIG. 1). Each of the filter stages 12, 14, 16 may include multiple cascaded instances of the structure 30.

The structure 30 includes a waveguide core 32 and a waveguide core 34 that define arms characterized by optical paths. The waveguide cores 32, 34 are routed to include adjacent sections that define a directional coupler 36 and adjacent sections that define a directional coupler 38. The waveguide core 32 includes a phase delay arm 40 that is joined by a bend to the section of the waveguide core 32 participating in the directional coupler 36 and that is joined by another bend to the section of the waveguide core 32 participating in the directional coupler 38. Similarly, the waveguide core 34 includes a phase delay arm 42 that is joined by a bend to the section of the waveguide core 34 participating in the directional coupler 36 and that is joined by another bend to the section of the waveguide core 34 participating in the directional coupler 38. In a representative embodiment, the bends joined to the phase delay arms 40, 42 may extend over an arc equal to about 90°. In an embodiment, the total length and associated optical path of the phase delay arm 40 may be greater than the total length and associated optical path of the phase delay arm 42.

The phase delay arm 40 includes a section 44, a section 46 between the directional coupler 36 and the section 44, and a section 48 between the directional coupler 38 and the section 44. In an embodiment, the section 44 of the phase delay arm 40 may curve in a bend to connect the sections 46, 48 of the phase delay arm 40. In a representative embodiment, the section 44 may be a semicircular bend and extend over an arc equal to about 180°.

The section 46 includes a taper 50, a taper 51, and a segment 52 that are arranged between the directional coupler 36 and the section 44 of the phase delay arm 40. The segment 52, which links and connects the taper 50 to the taper 51, is longitudinally positioned along the length of the section 46 between the taper 50 and the taper 51. The taper 50 may adjoin the segment 52, and the taper 51 may also adjoin the segment 52. In an embodiment, the tapers 50, 51 and the segment 52, in length, constitute a portion of the total length of the section 46. The taper 50 provides a width transition between the segment 52 and an adjoined segment of the section 46 between the taper 50 and the directional coupler 36, and the taper 51 provides a width transition between the segment 52 and an adjoined segment of the section 46 between the taper 51 and the section 44.

The segment 52 of the section 46 has a length L1 measured between the width transitions at the tapers 50, 51. In an embodiment, the segment 52 may have a width W1 over the length L1. In an embodiment, the width W1 of the segment 52 may be constant over the length L1. In an embodiment, the tapers 50, 51 may have respective widths that vary between the width W1 of the segment 52 at the junctions with the tapers 50, 51 and the widths at the width transitions with the adjacent segments of the section 46.

The width transitions provided by the tapers 50, 51, each of which widens with a taper angle, compensate for the width changes of the section 46 that are associated with the segment 52. The segment 52 provides the section 46 of the phase delay arm 40 with multiple widths inasmuch as the segment 52 has a width W1 that differs from the width of the adjacent segment of the section 46 between the taper 50 and the directional coupler 36 and the adjacent segment of the section 46 between the taper 51 and the section 44. The tapers 50, 51 also provide the section 46 of the phase delay arm 40 with multiple widths inasmuch as the tapers 50, 51 also have widths that differ from the width of the adjacent segment of the section 46 between the taper 50 and the directional coupler 36 and the adjacent segment of the section 46 between the taper 51 and the section 44. The tapers 50, 51 and the segment 52 provide with section 46 of the phase delay arm 40 with multiple widths inasmuch as the segment 52 and the tapers 50, 51 have widths that differ from the width of the adjacent segment of the section 46 between the taper 50 and the directional coupler 36 and the segment 52 and the tapers 50, 51 have widths that differ from the width of the adjacent segment of the section 46 between the taper 51 and the section 44. In an embodiment, the width W1 of segment 52 of the section 46, the width of the taper 50, and the width of the taper 51 may be greater than the width of the adjacent segment of the section 46 between the taper 50 and the directional coupler 36 and the width of the adjacent segment of the section 46 between the taper 51 and the section 44. In an alternative embodiment, the width W1 of the segment 52 of the section 46, the width of the taper 50, and the width of the taper 51 may be less than the width of the adjacent segment of the section 46 between the taper 50 and the directional coupler 36 and the width of the adjacent segment of the section 46 between the taper 51 and the section 46.

The section 48 includes a taper 54, a taper 55, and a segment 56 that are arranged between the directional coupler 38 and the section 44 of the phase delay arm 40. The segment 56, which links and connects the taper 54 to the taper 55, is longitudinally positioned along the length of the section 46 between the taper 54 and the taper 55. The taper 54 may adjoin the segment 56, and the taper 55 may also adjoin the segment 56. In an embodiment, the tapers 54, 55 and the segment 56, in length, constitute a portion of the total length of the section 48. The taper 54 provides a width transition between the segment 56 and an adjoined segment of the section 48 between the taper 54 and the directional coupler 38, and the taper 55 provides a width transition between the segment 56 and an adjoined segment of the section 48 between the taper 55 and the section 44.

The segment 56 of the section 48 has a length L2 measured between the width transitions at the tapers 54, 55. In an embodiment, the segment 56 may have a width W2 over the length L2. In an embodiment, the width W2 of the segment 56 may be constant over the length L2. In an embodiment, the tapers 54, 55 may have respective widths that vary between the width W2 of the segment 56 at the junctions with the tapers 54, 55 and the widths at the width transitions with the adjacent segments of the section 48.

The width transitions provided by the tapers 54, 55, each of which widens with a taper angle, compensate for the width changes of the section 48 that are associated with the segment 56. The segment 56 provides the section 48 of the phase delay arm 40 with multiple widths inasmuch as the segment 56 has a width W2 that differs from the width of the adjacent segment of the section 48 between the taper 54 and the directional coupler 38 and the adjacent segment of the section 48 between the taper 55 and the section 48. The tapers 54, 55 also provide the section 48 of the phase delay arm 40 with multiple widths inasmuch as the tapers 54, 55 also have widths that differ from the width of the adjacent segment of the section 48 between the taper 54 and the directional coupler 38 and the adjacent segment of the section 48 between the taper 55 and the section 48. The tapers 54, 55 and the segment 56 provide with section 48 of the phase delay arm 40 with multiple widths inasmuch as the segment 56 and the tapers 54, 55 have widths that differ from the width of the adjacent segment of the section 48 between the taper 54 and the directional coupler 38 and the segment 56 and the tapers 54, 55 have widths that differ from the width of the adjacent segment of the section 48 between the taper 55 and the section 48. In an embodiment, the width W2 of segment 56 of the section 48, the width of the taper 54, and the width of the taper 55 may be greater than the width of the adjacent segment of the section 48 between the taper 54 and the directional coupler 38 and the width of the adjacent segment of the section 48 between the taper 55 and the section 48. In an alternative embodiment, the width W2 of the segment 56 of the section 48, the width of the taper 54, and the width of the taper 55 may be less than the width of the adjacent segment of the section 48 between the taper 54 and the directional coupler 38 and the width of the adjacent segment of the section 48 between the taper 55 and the section 48.

The phase delay arm 42 includes a section 58, a section 60 between the directional coupler 36 and the section 58, and a section 62 between the directional coupler 38 and the section 58. In an embodiment, the section 58 of the phase delay arm 42 may curve in a bend to connect the sections 60, 62 of the phase delay arm 42. In a representative embodiment, the section 58 may be a semicircular bend and extend over an arc equal to about 180°.

The section 60 includes a taper 64, a taper 65, and a segment 66 that are arranged between the directional coupler 36 and the section 58 of the phase delay arm 42. The segment 66, which links and connects the taper 64 to the taper 65, is longitudinally positioned along the length of the section 60 between the taper 64 and the taper 65. The taper 64 may adjoin the segment 66, and the taper 65 may also adjoin the segment 66. In an embodiment, the tapers 64, 65 and the segment 66, in length, constitute a portion of the total length of the section 60. The taper 64 provides a width transition between the segment 66 and an adjoined segment of the section 60 between the taper 64 and the directional coupler 36, and the taper 65 provides a width transition between the segment 66 and an adjoined segment of the section 60 between the taper 65 and the section 58.

The segment 66 of the section 60 has a length L3 measured between the width transitions at the tapers 64, 65. In an embodiment, the segment 66 may have a width W3 over the length L3. In an embodiment, the width W3 of the segment 66 may be constant over the length L3. In an embodiment, the tapers 64, 65 may have respective widths that vary between the width W3 of the segment 66 at the junctions with the tapers 64, 65 and the widths at the width transitions with the adjacent segments of the section 60.

The width transitions provided by the tapers 64, 65, each of which widens with a taper angle, compensate for the width changes of the section 60 that are associated with the segment 66. The segment 66 provides the section 60 of the phase delay arm 42 with multiple widths because the segment 66 has a width W3 that differs from the width of the adjacent segment of the section 60 between the taper 64 and the directional coupler 36 and the adjacent segment of the section 60 between the taper 65 and the section 58. The tapers 64, 65 also provide the section 60 of the phase delay arm 42 with multiple widths because the tapers 64, 65 also have widths that differ from the width of the adjacent segment of the section 60 between the taper 64 and the directional coupler 36 and the adjacent segment of the section 60 between the taper 65 and the section 58. The tapers 64, 65 and the segment 66 provide with section 60 of the phase delay arm 42 with multiple widths inasmuch as the segment 66 and the tapers 64, 65 have widths that differ from the width of the adjacent segment of the section 60 between the taper 64 and the directional coupler 36 and the segment 66 and the tapers 64, 65 have widths that differ from the width of the adjacent segment of the section 60 between the taper 65 and the section 58. In an embodiment, the width W3 of segment 66 of the section 60, the width of the taper 64, and the width of the taper 65 may be greater than the width of the adjacent segment of the section 60 between the taper 64 and the directional coupler 36 and the width of the adjacent segment of the section 60 between the taper 65 and the section 58. In an alternative embodiment, the width W3 of the segment 66 of the section 60, the width of the taper 64, and the width of the taper 65 may be less than the width of the adjacent segment of the section 60 between the taper 64 and the directional coupler 36 and the width of the adjacent segment of the section between the taper 65 and the section 60.

The section 62 includes a taper 68, a taper 69, and a segment 70 that are arranged between the directional coupler 38 and the section 58 of the phase delay arm 42. The segment 70, which links and connects the taper 68 to the taper 69, is longitudinally positioned along the length of the section 62 between the taper 68 and the taper 69. The taper 68 may adjoin the segment 70, and the taper 69 may also adjoin the segment 70. In an embodiment, the tapers 68, 69 and the segment 70, in length, constitute a portion of the total length of the section 62. The taper 68 provides a width transition between the segment 70 and an adjoined segment of the section 62 between the taper 68 and the directional coupler 38, and the taper 69 provides a width transition between the segment 70 and an adjoined segment of the section 62 between the taper 69 and the section 58.

The segment 70 of the section 62 has a length L4 measured between the width transitions at the tapers 68, 69. In an embodiment, the segment 70 may have a width W4 over the length L4. In an embodiment, the width W4 of the segment 70 may be constant over the length L4. In an embodiment, the tapers 68, 69 may have respective widths that vary between the width W4 of the segment 70 at the junctions with the tapers 68, 69 and the widths at the width transitions with the adjacent segments of the section 62.

The width transitions provided by the tapers 68, 69, each of which widens with a taper angle, compensate for the width changes of the section 62 that are associated with the segment 70. The segment 70 provides the section 62 of the phase delay arm 42 with multiple widths because the segment 70 has a width W4 that differs from the width of the adjacent segment of the section 62 between the taper 68 and the directional coupler 38 and the adjacent segment of the section 62 between the taper 69 and the section 58. The tapers 68, 69 also provide the section 62 of the phase delay arm 42 with multiple widths because the tapers 68, 69 also have widths that differ from the width of the adjacent segment of the section 62 between the taper 68 and the directional coupler 38 and the adjacent segment of the section 62 between the taper 69 and the section 58. The tapers 68, 69 and the segment 70 provide with section 62 of the phase delay arm 42 with multiple widths inasmuch as the segment 70 and the tapers 68, 69 have widths that differ from the width of the adjacent segment of the section 62 between the taper 68 and the directional coupler 38 and the segment 70 and the tapers 68, 69 have widths that differ from the width of the adjacent segment of the section 62 between the taper 69 and the section 58. In an embodiment, the width W4 of segment 70 of the section 62, the width of the taper 68, and the width of the taper 69 may be greater than the width of the adjacent segment of the section 62 between the taper 68 and the directional coupler 38 and the width of the adjacent segment of the section 62 between the taper 69 and the section 58. In an alternative embodiment, the width W4 of the segment 70 of the section 62, the width of the taper 68, and the width of the taper 69 may be less than the width of the adjacent segment of the section 62 between the taper 68 and the directional coupler 38 and the width of the adjacent segment of the section between the taper 69 and the section 62.

The waveguide cores 32, 34 may be positioned in a vertical direction over a dielectric layer 72, a dielectric layer 73, and a substrate 74. In an embodiment, the dielectric layers 72, 73 may be comprised of a dielectric material, such as silicon dioxide, and the substrate 74 may be comprised of a semiconductor material, such as single-crystal silicon. In an embodiment, the dielectric layer 72 may be a buried oxide layer of a silicon-on-insulator substrate, and the dielectric layer 72 may separate the waveguide cores 32, 34 from the substrate 74. In an alternative embodiment, the dielectric layer 73 may be omitted such that the waveguide cores 32, 34 are positioned on the dielectric layer 72.

In an embodiment, the waveguide cores 32, 34 may be comprised of a material having a refractive index that is greater than the refractive index of silicon dioxide. In an embodiment, the waveguide cores 32, 34 may be comprised of a dielectric material, such as silicon nitride. In an alternative embodiment, the waveguide cores 32, 34 may be comprised of a different dielectric material, such as silicon oxynitride or aluminum nitride. In an alternative embodiment, the waveguide cores 32, 34 may be comprised of a semiconductor material, such as single-crystal silicon, amorphous silicon, or polycrystalline silicon. In alternative embodiments, other materials, such as a polymer or a III-V compound semiconductor, may be used to form the waveguide cores 32, 34.

In an embodiment, the waveguide cores 32, 34 may be formed by patterning a layer of material with lithography and etching processes. In an embodiment, the waveguide cores 32, 34 may be formed by patterning a deposited layer of a material (e.g., silicon nitride). In an alternative embodiment, the waveguide cores 32, 34 may be formed by patterning the semiconductor material (e.g., single-crystal silicon) of a device layer of a silicon-on-insulator substrate.

In an alternative embodiment, the section 46, the section 48, the section 60, and/or the section 62 may be comprised of different materials having unequal refractive indices. For example, the different materials may be silicon nitrides that are deposited under different deposition conditions resulting in unequal refractive indices.

The section 46 may have a thickness T1, the section 48 may have a thickness T2, section 60 may have a thickness T3, and the section 62 may have a thickness T4. In an embodiment, the thicknesses T1, T2, T3, T4 may be equal. In an alternative embodiment, one or more of the thicknesses T1, T2, T3, T4 may be unequal.

The section 46 of the phase delay arm 40 and the section 48 of the phase delay arm 40 are asymmetrical, and the section 60 of the phase delay arm 42 and the section 62 of the phase delay arm 42 are asymmetrical. As used herein, asymmetrical means a pair of sides or halves that are not the same or, in other words, that are not symmetrical.

In an embodiment, the width W1 of the segment 52 of the section 46 may differ from the width W2 of the segment 56 of the section 46 to provide an asymmetry in the phase delay arm 40. In an embodiment, the length L1 of the segment 52 of the section 46 may differ from the length L2 of the segment 56 of the section 46 to provide an asymmetry in the phase delay arm 40. In an embodiment, the width W1 and the length L1 of the segment 52 of the section 46 may differ from the width W2 and the length L2 of the segment 56 of the section 46 to provide an asymmetry in the phase delay arm 40.

In an embodiment, the width W3 of the segment 66 of the section 46 may differ from the width W4 of the segment 70 of the section 46 to provide an asymmetry in the phase delay arm 42. In an embodiment, the length L3 of the segment 66 of the section 46 may differ from the length L4 of the segment 70 of the section 46 to provide an asymmetry in the phase delay arm 42. In an embodiment, the width W3 and the length L3 of the segment 66 of the section 46 may differ from the width W4 and the length L4 of the segment 70 of the section 46 to provide an asymmetry in the phase delay arm 42.

Differences in refractive index and/or thickness may also be utilized, either alone or in combination with differences in width and/or length, to provide the asymmetry in one or both of the phase delay arms 40, 42.

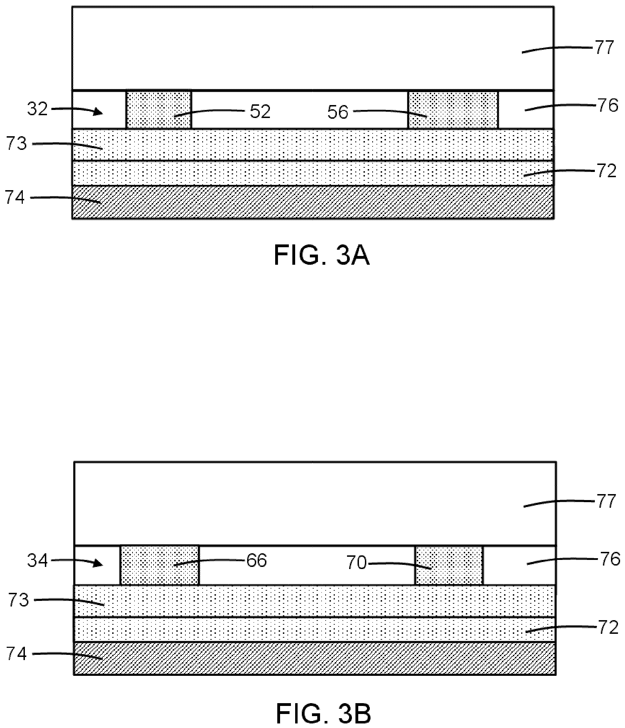

With reference to FIGS. 3A, 3B and at a fabrication stage subsequent to FIGS. 2, 2A, 2B, a dielectric layer 76 is formed over the waveguide cores 32, 34. The dielectric layer 76 may be comprised of a dielectric material, such as silicon dioxide, that is deposited and then planarized following deposition. The dielectric material constituting the dielectric layer 76 may have a refractive index that is less than the refractive index of the material constituting the waveguide cores 32, 34. A back-end-of-line stack 77 may be formed over the dielectric layer 76. The back-end-of-line stack 77 may include stacked dielectric layers in which each dielectric layer is comprised of a dielectric material, such as silicon dioxide, silicon nitride, tetraethylorthosilicate silicon dioxide, or fluorinated-tetraethylorthosilicate silicon dioxide.

In use, light is input into the directional coupler 36 via either the waveguide core 32 or the waveguide core 34, and the directional coupler 36 splits the light between the waveguide core 32 and the waveguide core 34. A portion of the split light propagates in the phase delay arm 40 of the waveguide core 32 and another portion of the split light propagates the phase delay arm 42 of the waveguide core 34. A portion of the split light propagates in the phase delay arm 40 of the waveguide core 32 and another portion of the split light propagates the phase delay arm 42 of the waveguide core 34. The length of the optical path in phase delay arm 40 is greater than the length of the optical path in phase delay arm 42. The difference in the lengths of the optical path results in phase modulation, which results in intensity modulation at the output from the wavelength-division-multiplexing filter supplied by the directional coupler 38.

The length of the phase delay arm 40, the length of the phase delay arm 42, the splitting ratio of the directional coupler 36, and the splitting ratio of the directional coupler 38 can be varied to vary the performance of the structure 30 or, alternatively, to target the structure 30 for deployment in a specific application. The structure 30 may be characterized by an improved tolerance to fabrication variations that would otherwise result in performance degradation when deployed in a wavelength-division-multiplexing filter. For example, the structure 30 may be effective to reduce channel drift in a wavelength-division-multiplexing filter.

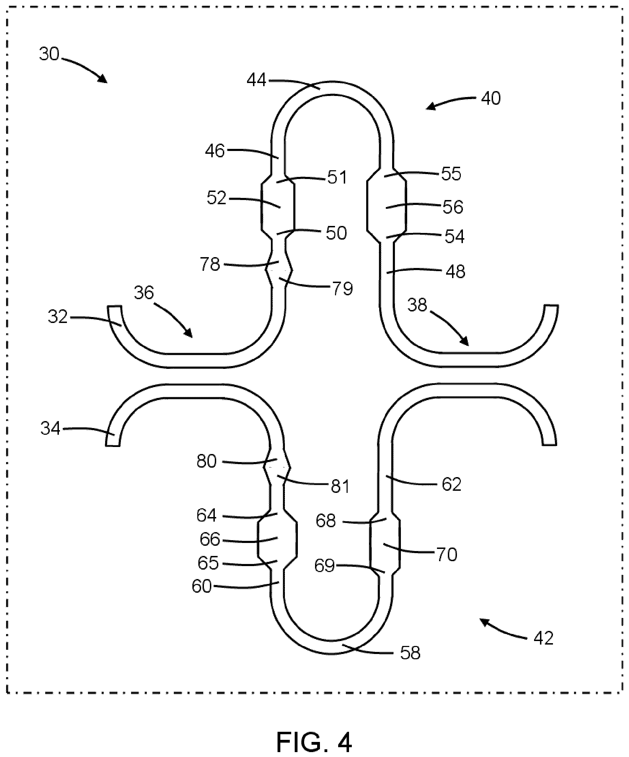

With reference to FIG. 4 and in accordance with alternative embodiments of the invention, the phase delay arm 40 may include a set of back-to-back tapers 78, 79 in the section 46 and the phase delay arm 40 may include a set of back-to-back tapers 80, 81 in the section 60. The tapers 78, 79, which taper in opposite directions, are directly connected due to the absence of a segment of the section 46 of the phase delay arm 40 between the taper 78 and the taper 79. Similarly, the tapers 80, 81, which taper in opposite directions, are directly connected due to the absence of a segment of the section 60 of the phase delay arm 42 between the taper 78 and the taper 79. In an alternative embodiment, the section 48 of the phase delay arm 40 may include a similar set of back-to-back tapers in which the directions of tapering are opposite. In an alternative embodiment, the section 62 of the phase delay arm 42 may include a similar set of back-to-back tapers in which the directions of tapering are opposite.

The introduction of the back-to-back tapers 78, 79 into the phase delay arm 40 may be used as a component of the asymmetry between the section 46 and the section 48. The introduction of the back-to-back tapers 80, 81 into the phase delay arm 42 may be used as a component of the asymmetry between the section 60 and the section 62.

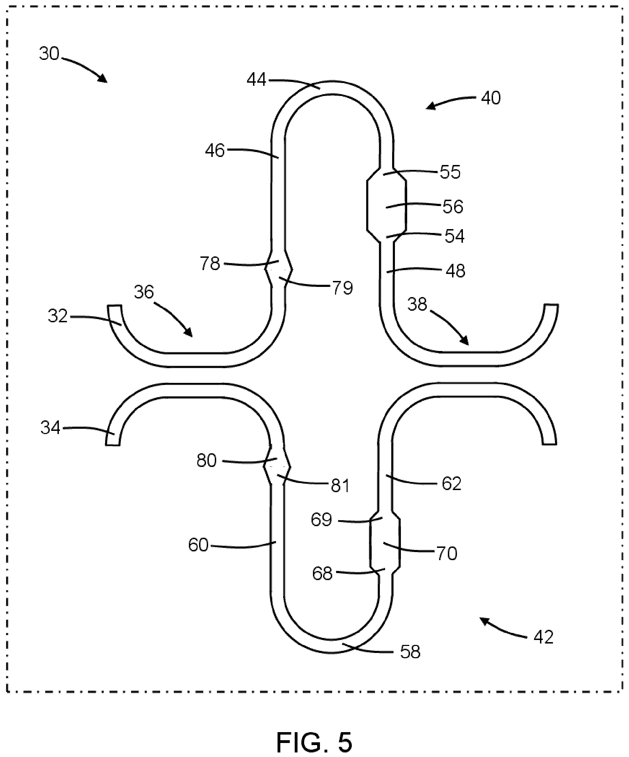

With reference to FIG. 5 and in accordance with alternative embodiments of the invention, the section 46 of the phase delay arm 40 may omit the tapers 50, 51 and segment 52 such that only the tapers 78, 79 are present and effectively widen a portion of the section 46. In addition, the section 60 of the phase delay arm 42 may omit the tapers 64, 65 and segment 66 such that only the tapers 80, 81 are present and effectively widen a portion of the section 60. The tapers 78, 79 and the tapers 80, 81 each have a back-to-back arrangement in which the directions of tapering are opposite. In an alternative embodiment, the tapers 50, 51 and segment 52 may be arranged in the section 46 of the phase delay arm 40 along with the tapers 78, 79. In an alternative embodiment, the tapers 64, 65 and segment 66 may be arranged in the section 60 of the phase delay arm 42 along with the tapers 80, 81.

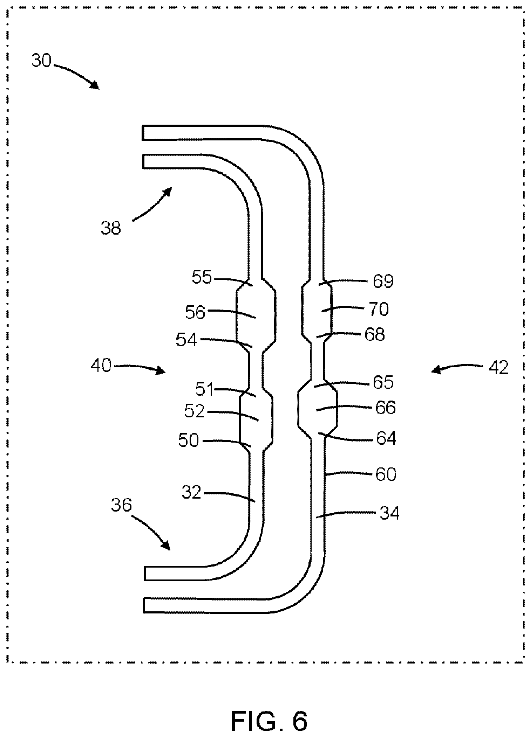

With reference to FIG. 6 and in accordance with alternative embodiments of the invention, the layout for the structure 30 may be altered such that the section 44 of the phase delay arm 40 and the section 58 of the phase delay arm 42 are omitted. In alternative embodiments, the structure 30 may had a different layout, such as a folded layout in which the phase delay arms 40, 42 are nested.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure for a wavelength-division-multiplexing filter, the structure comprising:
a first waveguide core including a first phase delay arm, the first phase delay arm having a first section and a second section connected to the first section; and
a second waveguide core including a second phase delay arm,
wherein the first section of the first phase delay arm is asymmetrical from the second section of the first phase delay arm.

2. The structure of claim 1 wherein the first section of the first phase delay arm is connected to the second section of the first phase delay arm by a bend, and, optionally, wherein the bend is semicircular.

3. The structure of claim 1 or claim 2 further comprising:
a first directional coupler; and
a second directional coupler,
wherein the first phase delay arm of the first waveguide core and the second phase delay arm of the second waveguide core are positioned between the first directional coupler and the second directional coupler.

4. The structure of one of claims 1 to 3 wherein the first phase delay arm and the second phase delay arm comprise silicon nitride.

5. The structure of one of claims 1 to 4 wherein the first section of the first phase delay arm includes a first taper and a second taper that is connected to the first taper.

6. The structure of claim 5 wherein the first section of the first phase delay arm includes a first segment that connects the first taper to the second taper, and/or wherein the first section of the first phase delay arm includes a third taper and a fourth taper that is directly connected to the third taper.

7. The structure of claim 5 wherein the second section of the first phase delay arm includes a third taper and a fourth taper connected to the third taper.

8. The structure of claim 7 wherein the first section of the first phase delay arm includes a first segment that connects the first taper to the second taper, the second section of the first phase delay arm includes a second segment that connects the third taper to the fourth taper, the first segment has a first width, the second segment has a second width, and the first width and the second width are unequal, and, optionally, wherein the first segment has a first length, the second segment has a second length, and the first length and the second length are unequal.

9. The structure of claim 6 wherein the second taper is directly connected to the first taper.

10. The structure of one of claims 1 to 9 wherein the second phase delay arm has a first section and a second section connected to the first section, and the first section of the second phase delay arm is asymmetrical from the second section of the second phase delay arm.

11. The structure of claim 10 wherein the first section of the second phase delay arm includes a first taper and a second taper connected to the first taper, and the second section of the second phase delay arm includes a third taper and a fourth taper connected to the third taper.

12. The structure of claim 11 wherein the first section of the second phase delay arm includes a first segment that connects the first taper to the second taper, the second section of the second phase delay arm includes a second segment connecting the third taper to the fourth taper, the first segment has a first width, the second segment has a second width, and the first width and the second width are unequal, or wherein the second taper is directly connected to the first taper.

13. The structure of one of claims 1 to 12 wherein the first section of the first phase delay arm includes multiple widths, and the second section of the first phase delay arm includes multiple widths.

14. The structure of one of claims 1 to 13 wherein the first section of the first waveguide core comprises a first material having a first refractive index, the second section of the first waveguide core comprises a second material having a second refractive index, and the first refractive index and the second refractive index are unequal, and/or wherein the first section of the first waveguide core comprises a first material having a first thickness, the second section of the first waveguide core comprises a second material having a second thickness, and the first thickness and the second thickness are unequal.

15. A method of forming a structure for a wavelength-division-multiplexing filter, the method comprising:
forming a first waveguide core including a first phase delay arm, wherein the first phase delay arm has a first section and a second section connected to the first section, and the first section of the first phase delay arm and the second section of the first phase delay arm are asymmetrical; and
forming a second waveguide core including a second phase delay arm.
